# EUROPÄISCHE PATENTANMELDUNG

(11) **EP 4 635 607 A1**
(43) Veröffentlichungstag der Anmeldung: **22.10.2025**
(21) Anmeldenummer: 25163493.7
(22) Anmeldetag: 13.03.2025
(51) Int. Cl.: B01D 61/02, B01D 61/14, B01D 65/02, B01D 65/08, C02F 1/44

(54) **VERFAHREN ZUR FILTRATION VON FLÜSSIGKEITEN IN EINER QUERSTROM-MEMBRANFILTRATIONSANLAGE UND QUERSTROM-MEMBRANFILTRATIONSANLAGE**

(30) Priorität: 15.04.2024 DE 102024110440
(71) Anmelder: KHS GmbH, 44143 Dortmund (DE)
(72) Erfinder: Süß, Florian, 44143 Dortmund (DE); Baborsky, Christopher, 44143 Dortmund (DE)

(57) **Zusammenfassung**

Die Erfindung betrifft ein Verfahren zur Filtration von Flüssigkeiten in einer Querstrom-Membranfiltrationsanlage und eine entsprechende Querstrom-Membranfiltrationsanlage. Erfindungsgemäß ist vorgesehen, dass das Verfahren in einer Querstrom-Membranfiltrationsanlage erfolgt, die wenigstens zwei Filtermodule aufweist, denen jeweils ein Unfiltrat aus einer gemeinsamen Unfiltratleitung zugeleitet wird, wobei die Filtermodule das Filtrat jeweils in eine gemeinsame Filtratleitung abgeben und wobei alle Filtermodule mittels einer gemeinsamen Retentatleitung untereinander verbunden sind. Als Verfahrensschritte erfolgt ein Nachordnen eines der Filtermodule gegenüber den weiteren, vorgelagerten Filtermodulen und dazu Leiten des Retentats aller vorgelagerten Filtermodule durch die Retentatleitung in das nachgeordnete Filtermodul. Nachfolgend erfolgt ein Durchführen des Filtrationsbetriebs, bis eine Reinigung des nachgeordneten Filtermoduls begonnen wird und dabei eine Unterbrechung des Filtrationsbetriebs oder ein Weiterführen des Filtrationsbetriebs mittels des oder der weiteren Filtermodule erfolgt. Schließlich wird dann zugleich oder nachfolgend ein nächstes Filtermodul nachgeordnet und das bisher nachgeordnete Filtermodul nach der Reinigung als vorgelagertes Filtermodul betrieben, wobei das Verfahren derart durchgeführt wird, dass jedes der Filtermodule im Verfahrensverlauf wechselnd und zeitweilig nachgeordnet betrieben wird.

## Beschreibung

Die Erfindung betrifft ein Verfahren zur Filtration von Flüssigkeiten in einer Querstrom-Membranfiltrationsanlage und eine entsprechende Querstrom-Membranfiltrationsanlage.

Verfahren und Anlagen zur Filtration werden insbesondere in der Getränkeindustrie oftmals eingesetzt, beispielsweise zum Entfernen von Hefe und/oder Hilfsstoffen aus Bier. Gängig erfolgt dies durch eine Querstrom-Membranfiltration, bei der zum Beispiel das Bier mit einem Trubanteil als Unfiltrat zugeführt wird und als Filtrat das geklärte Bier als Endprodukt erhalten wird.

Die ausgefilterten Stoffe, der Trub, reichern sich bei der Filtration in der Querstrom-Membranfiltrationsanlage im Retentat an. Wird das Retentat in das Unfiltrat zurückgeführt, sinkt mit zunehmender Betriebsdauer die Filtrierbarkeit des erhaltenen Gemisches und damit die Leistung des Filtrationsprozesses. Schließlich sinkt die Filterleistung unter eine wirtschaftlich und technisch sinnvolle Schwelle und somit ist ein weiterer Filtrationsprozess mittels der Querstrom-Membranfiltrationsanlage nach dem Erreichen dieser Belastungsgrenze nicht mehr möglich. Zudem ist mit zunehmender Betriebsdauer und der damit einhergehenden Retentatanreichung der vorhandene Trubraum zunehmend ausgeschöpft. Schließlich nimmt generell die Filterleistung eines filternden Elements mit zunehmender Betriebsdauer ab. In jedem dieser Fälle muss der Filtrationsprozess unterbrochen werden und das filternde Element durch eine geeignete Behandlung wieder in einen Zustand versetzt werden, der eine Wiederaufnahme des Filtrationsbetriebs erlaubt. Hierbei wird auch die Trubmenge reduziert.

Ein selektives Reinigen von einzelnen filternden Elementen in einer Membranfilteranlage mit zahlreichen filternden Elementen ist bereits bekannt, wobei die Reinigung typischerweise auch dann erfolgt, wenn das jeweilige filternde Element die wirtschaftlich oder technisch sinnvolle Schwelle erreicht hat oder wenn der Trubraum ausgeschöpft ist. Auch hier besteht jedoch das Problem, dass sich die filternden Elemente kontinuierlich zusetzen und gerade bei einem Beginn des Verfahrens mit gereinigten filternden Elementen dies für alle filternden Elemente in etwa zum gleichen Zeitpunkt erfolgt, wodurch die Filterleistung der Membranfilteranlage insgesamt mit zunehmender Betriebsdauer stark absinkt und dann eine Reinigung zahlreicher filternder Elemente innerhalb eines kurzen Zeitraums notwendig ist.

Der Erfindung liegt die Aufgabe zugrunde, ein Verfahren zur Filtration sowie eine Querstrom-Membranfiltrationsanlage bereitzustellen, die einen kontinuierlichen Filtrationsbetrieb mit einer durchgängig hohen Filterleistung sowie einem effizienten und gezielten Trubaustrag ermöglichen.

Die Aufgabe wird erfindungsgemäß durch ein Verfahren zur Filtration gemäß Anspruch 1 sowie durch eine Querstrom-Membranfiltrationsanlage gemäß Anspruch 15 gelöst. Vorteilhafte Weiterbildungen der Erfindung sind in den abhängigen Ansprüchen wiedergegeben.

Das erfindungsgemäße Verfahren zur Filtration von Flüssigkeiten, insbesondere Flüssigkeiten der Getränkeindustrie oder von Getränken, erfolgt in einer Querstrom-Membranfiltrationsanlage, die wenigstens zwei Filtermodule aufweist, denen jeweils ein Unfiltrat aus einer gemeinsamen Unfiltratleitung zugeleitet wird, wobei die Filtermodule das Filtrat jeweils in eine gemeinsame Filtratleitung abgeben und wobei alle Filtermodule mittels einer gemeinsamen Retentatleitung untereinander verbunden sind. Als Verfahrensschritte erfolgt, insbesondere sich periodisch wiederholend, zunächst ein Nachordnen wenigstens eines, bevorzugt genau eines der Filtermodule gegenüber dem oder den weiteren, vorgelagerten Filtermodulen und dazu Leiten wenigstens eines Teils des Retentats des anderen, mehrerer oder aller vorgelagerten Filtermodule durch die Retentatleitung in das nachgeordnete Filtermodul. Nachfolgend erfolgt ein Durchführen des Filtrationsbetriebs und dabei bevorzugt ein Zuleiten von Unfiltrat wenigstens zu den vorgelagerten Filtermodulen und Zusammenführen des Filtrats aller Filtermodule, bis eine Reinigung des nachgeordneten Filtermoduls begonnen wird und/oder aufgrund eines Erreichens der Belastungsgrenze des nachgeordneten Filtermoduls notwendig ist, worauf dann ein Reinigen des nachgeordneten Filtermoduls und dabei eine Unterbrechung des Filtrationsbetriebs oder ein Weiterführen des Filtrationsbetriebs mittels des oder der weiteren Filtermodule, insbesondere ausschließlich mittels des oder der weiteren Filtermodule, erfolgt. Schließlich wird dann zugleich oder nachfolgend ein nächstes Filtermodul nachgeordnet und das bisher nachgeordnete Filtermodul nach der Reinigung als vorgelagertes Filtermodul betrieben, wobei das Verfahren derart betrieben werden kann und bevorzugt derart durchgeführt wird, dass jedes der Filtermodule im Verfahrensverlauf wechselnd und/oder zeitweilig nachgeordnet betrieben wird.

Die erfindungsgemäße Querstrom-Membranfiltrationsanlage zur Filtration von Flüssigkeiten, insbesondere Flüssigkeiten der Getränkeindustrie oder von Getränken, weist wenigstens zwei Filtermodule, eine, insbesondere genau eine die Filtermodule mit einer Unfiltratversorgung und insbesondere einem Unfiltrattank verbindende Unfiltratleitung, eine das Filtrat aus den Filtermodulen, insbesondere zu einem Filtrattank, leitende Filtratleitung, eine gemeinsame, wenigstens alle Filtermodule untereinander und bevorzugt auch mit dem Unfiltrattank verbindende Retentatleitung, und eine Steuervorrichtung zum Steuern eines wechselnd nachgeordneten Betriebs der einzelnen Filtermodule, insbesondere gemäß dem erfindungsgemäßen Verfahren. Die Filtermodule sind zudem erfindungsgemäß derart innerhalb der Querstrom-Membranfiltrationsanlage angeordnet und insbesondere darin eingebunden, dass alle Filtermodule zueinander parallel betrieben werden können und zugleich jedes Filtermodul zu den übrigen Filtermodulen einzeln oder als Gruppe als nachgeordnetes Filtermodul in Reihe schaltbar ist. Bei einer solchen Anordnung des nachgeordneten Filtermoduls in Reihe wird bevorzugt dem nachgeordneten Filtermodul das Retentat der weiteren Filtermodule und/oder kein Unfiltrat zugeleitet.

Die Erfinder haben erkannt, dass es vorteilhaft ist, den Zeitpunkt einer notwendigen Reinigung der gemeinsam arbeitenden Filtermodule zu entzerren, was bei einer einfachen Parallelschaltung der Filtermodule nicht von selbst eintritt und bei semi-kontinuierlicher Fahrweise der Querstrom-Membranfiltrationsanlage gegebenenfalls eine Behandlung einzelner Filtermodule abseits des optimalen Zeitpunkts erforderlich machen kann. Dagegen ist mittels des erfindungsgemäßen Verfahrens eine zeitliche Steuerung der Notwendigkeit einer Reinigung leicht möglich und zudem ergibt sich zwangsläufig eine zeitliche Entzerrung des Zeitpunkts der notwendigen Reinigung der Filtermodule.

Zudem können mit dem erfindungsgemäßen Verfahren bei jeder Reinigung eines Filtermoduls anteilig mehr Stoffe bzw. kann mehr Trub aus dem Gesamtsystem ausgeschleust werden, als es bei einfacher Parallelschaltung der Filtermodule der Fall wäre. Durch ein früheres Beginnen der Reinigung einzelner Filtermodule sinkt zudem insgesamt die durchschnittliche Stofflast im Gesamtsystem. Weiterhin haben Berechnungen gezeigt, dass unmittelbar nach der Reinigung eines Filtermoduls sowie nach dem Zuschalten als vorgelagertes Filtermodul die Trubbelastung auch in den übrigen vorgelagerten Filtermodulen absinkt, wodurch in der gesamten Querstrom-Membranfiltrationsanlage eine Erhöhung der Filterleistung erreicht werden kann.

Unter einem Verfahren zur Filtration einer Flüssigkeit wird grundsätzlich jedes Verfahren verstanden, das durchgeführt wird, um Stoffe, insbesondere Trübstoffe, Hefe, Trub, Partikel und/oder Hilfsstoffe, aus einer Flüssigkeit mittels wenigstens eines Filterelements zu entfernen. Bei der Flüssigkeit kann es sich zunächst sowohl um ein Getränk oder eine Zutat eines Getränks, aber auch um eine in einem Verfahren der Getränkeindustrie eingesetzte Flüssigkeit, wie eine Spülflüssigkeit, eine Reinigungsflüssigkeit und/oder eine Kühlflüssigkeit handeln. Bevorzugt sind die Flüssigkeiten der Getränkeindustrie jedoch ausschließlich Zutaten und Produkte und ganz besonders bevorzugt ausschließlich Produkte der Getränkeindustrie, insbesondere Bier und/oder bierhaltige Getränke. Entsprechend ist die Flüssigkeit bevorzugt eine Suspension. Die den Filtermodulen zugeführte Flüssigkeit wird dabei als Unfiltrat bezeichnet und wird über eine Unfiltratleitung den Filtermodulen zugeführt. Insbesondere bevorzugt sind alle Filtermodule parallel zueinander an der Unfiltratleitung angeschlossen.

Das Verfahren zur Filtration wird erfindungsgemäß mittels einer Querstrom-Membranfiltrationsanlage durchgeführt, worunter grundsätzlich eine Anlage verstanden wird, die mittels wenigstens eines Filterelements und insbesondere wenigstens einer Filtermembran die Flüssigkeit filtert, wobei das Filtern im Querstrom bzw. in einem Crossflow-Verfahren erfolgt. Die gefilterte Flüssigkeit, d.h. die durch das Filterelement bzw. durch die Filtermembran hindurchgetretene Flüssigkeit wird als Filtrat bezeichnet und über eine Filtratleitung, insbesondere eine gemeinsame Filtratleitung aller Filtermodule, abgeführt, wobei besonders bevorzugt alle Filtermodule parallel zueinander an der Filtratleitung angeschlossen sind.

Um das erfindungsgemäße Verfahren zu ermöglichen, ist es essenziell, dass alle Filtermodule mittelbar oder unmittelbar mittels einer gemeinsamen Retentatleitung untereinander verbunden sind, sodass es möglich ist, wenigstens einen Teil des Retentats und bevorzugt das gesamte Retentat jedes vorgelagerten Filtermoduls und insbesondere aller vorgelagerten Filtermodule durch die Retentatleitung in ein beliebiges, nachgeordnetes Filtermodul zu leiten. Dazu sind vorzugsweise alle Filtermodule unmittelbar und/oder parallel zueinander mit einer gemeinsamen Retentatleitung verbunden.

Bei einer möglichen Ausgestaltung sind alle Filtermodule an einer gemeinsamen Retentatleitung angeschlossen. Darüber hinaus ist aber auch denkbar, dass an jedem Filtermodul bzw. jedem Filtermodul nachfolgend eine gemeinsame Retentatsammelleitung zum Ableiten des Retentats aller vorgelagerten Filtermodule angeordnet ist und/oder dass jeweils eine Retentatzuleitung zum Zuleiten des gesammelten Retentats, insbesondere aus den vorgelagerten Filtermodulen und/oder über die Retentatsammelleitung, zu dem oder den nachgeordnet betriebenen Filtermodulen vorgesehen ist. Bevorzugt ist zwischen dem jeweiligen Filtermodul und der Retentatsammelleitung jeweils ein Retentatableitventil angeordnet. Alternativ oder zusätzlich weist bevorzugt jede Retentatzuleitung ein Retentatzuleitventil auf. Die Retentatsammelleitung geht zudem bevorzugt, insbesondere im Bereich eines Retentatrückflussventils zum Rückleiten des Retentats zu dem Unfiltrattank, in eine gemeinsame Retentatleitung über. Weiterhin bevorzugt zweigen die Retentatzuleitungen jeweils von der Retentatsammelleitung ab.

Bevorzugt ist in der Unfiltratleitung und/oder in der Retentatleitung vor jedem der Filtermodule ein Ventil zum Sperren der jeweiligen Leitung angeordnet. Alternativ oder zusätzlich ist bevorzugt in der Filtratleitung hinter jedem Filtermodul ein Ventil angeordnet, um die Filtereinheit gegenüber der Filtratleitung zu sperren. Zusätzlich kann auch ein weiteres Ventil am Auslass eines Unfiltrattanks, am Einlass eines Filtrattanks und/oder an einer Leitung im Bereich eines Puffertanks angeordnet sein. Weiterhin bevorzugt ist wenigstens ein Teil der Ventile und bevorzugt sind alle Ventile mittels einer Steuervorrichtung der Querstrom-Membranfiltrationsanlage ansteuerbar.

Erfindungsgemäß weist die Querstrom-Membranfiltrationsanlage wenigstens zwei, bevorzugt zwischen zwei und sechs und besonders bevorzugt zwischen drei und vier Filtermodule auf. Ein Filtermodul ist zunächst eine funktional und/oder körperlich eigenständige Baueinheit einer Querstrom-Membranfiltrationsanlage und weist dabei wenigstens einen Unfiltratzufluss, insbesondere einen Anschluss für eine Unfiltratleitung, wenigstens einen Filtratabfluss, insbesondere einen Anschluss für eine Filtratleitung, und/oder einen Retentatauslass, insbesondere einen Anschluss für eine Retentatleitung, auf. Besonders bevorzugt weist jedes Filtermodul der Querstrom-Membranfiltrationsanlage genau einen Unfiltratzufluss, einen Filtratabfluss sowie einen Retentatauslass auf.

Ein Filtermodul kann dabei eine oder mehrere Filtereinheiten aufweisen. Bei einer Verwendung mehrerer Filtereinheiten in einem Filtermodul können die einzelnen Filtereinheiten zueinander sowohl parallel als auch in Reihe angeordnet sein. Zudem ist auch eine Kombination denkbar, wobei bevorzugt nicht mehrere Filtereinheiten in Reihe angeordnet sind. Dagegen ist eine parallele Anordnung mehrerer Filtereinheiten in einem Filtermodul denkbar. Ein Filtermodul und insbesondere jede Filtereinheit eines Filtermoduls weist bevorzugt wenigstens eine Filtermembran und besonders bevorzugt genau eine Filter- bzw. Trennmembran oder ein entsprechendes Filterelement auf. Alternativ können auch mehrere Filter bzw. Filtermembranen zueinander parallel und/oder in Reihe in einem Filtermodul angeordnet sein, beispielsweise zwischen 2 und 10, bevorzugt zwischen 2 und 8 und besonders bevorzugt genau sechs. Die Filtermembran kann dabei aus einem beliebigen Material, beispielsweise aus Keramik und/oder aus Kunststoff gebildet sein.

Besonders bevorzugt sind alle Filtermodule der Querstrom-Membranfiltrationsanlage identisch zueinander aufgebaut, weisen eine zueinander identische Anzahl und/oder Anordnung der einzelnen Filtereinheiten auf und/oder sind innerhalb der Querstrom-Membranfiltrationsanlage mit gleicher Ausrichtung angeordnet.

Die Filtermodule sind grundsätzlich parallel zueinander an der Unfiltratleitung, an der Filtratleitung und/oder an der Retentatleitung angeschlossen. Ein Nachordnen und insbesondere dazu ein Anordnen des nachgeordneten Filtermoduls in Reihe mit allen, besonders bevorzugt zugleich zueinander parallelen, vorgelagerten Filtermodulen erfolgt bevorzugt ausschließlich durch das Öffnen und/oder Schließen eines oder mehrerer Ventile in der Unfiltratleitung, der Filtratleitung und/oder der Retentatleitung. Besonders bevorzugt erfolgt das Nachordnen, insbesondere ausgehend von einem parallelen Betrieb aller Filtermodule, ausschließlich durch ein Schließen eines Ventils in der Unfiltratzuleitung zu diesem Filtermodul. Zudem ist bevorzugt, dass ein Ventil an der Filtratleitung hinter dem nachgeordneten Filtermodul und/oder ein Ventil an der Retentatleitung geöffnet bleibt oder geöffnet wird, sodass das Retentat der vorgelagerten Filtermodule durch die Retentatleitung in das nachgeordnete Filtermodul einströmen kann. Alternativ oder zusätzlich zu Absperrventilen können auch einzeln, teilweise oder vollständig Regelventile eingesetzt werden, die dann bevorzugt ein gezieltes Steuern der Durchflussmenge erlauben. Ein solches Regelventil kann dabei insbesondere an der Unfiltratleitung, an der Filtratleitung und/oder an der Retentatleitung angeschlossen sein. Beim Nachordnen des Filtermoduls kehrt sich also innerhalb der Retentatleitung im Bereich des nachgeordneten Filtermoduls die Strömungsrichtung um.

Insbesondere kann nach erfolgtem Nachordnen dann die zugeleitete Flüssigkeit ausschließlich durch das nachgeordnete Filtermodul gefiltert in die Filtratleitung abfließen, während der Trub bzw. die Filterstoffe vollständig im nachgeordneten Filtermodul verbleiben und sich dort ansammeln, sodass der Querstrom-Membranfiltrationsanlage schnell eine große Menge Trub und Filterstoffe entzogen und im Rahmen einer nachfolgenden Reinigung daraus entfernt werden können. Durch das Nachordnen eines Filtermoduls erfolgt ein gezieltes und überproportionales Belasten dieses Filtermoduls, wobei zugleich die Belastung der übrigen Filtermodule verringert wird und/oder das nachgeordnete Filtermodul seine Belastungsgrenze deutlich schneller erreicht.

Generell ist sowohl eine Gestaltung mit einem einzigen nachgeordneten Filtermodul als auch eine zumindest zeitweise Nachordnung mehrerer Filtermodule denkbar und entsprechend ist jede mit einem einzelnen nachgeordneten Filtermodul offenbarte Ausführung grundsätzlich auch mit mehreren nachgeordneten Filtermodulen denkbar. Dabei ist es bevorzugt, dass wenigstens zwei und bevorzugt alle nachgeordneten Filtermodule parallel zueinander und/oder in Reihe mit den vorgelagerten Filtermodulen betrieben werden. Grundsätzlich wäre aber auch denkbar, mehrere nachgeordnete Filtermodule auch in Bezug zueinander in Reihe anzuordnen. Bei der Nachordnung mehrerer Filtermodule ist es jedoch generell bevorzugt, dass nur zeitweise mehrere Filtermodule nachgeordnet sind, wobei mehrere Filtermodule zeitgleich und/oder für eine identische Dauer nachgeordnet werden können. Alternativ ist aber auch ein lediglich sich zeitlich überschneidendes Nachordnen mehrerer Filtermodule denkbar, bei dem ein weiteres Filtermodul zu einem bereits nachgeordneten, weiteren Filtermodul nachgeordnet wird und besonders bevorzugt das bereits nachgeordnete, weitere Filtermodul kurz darauf dann gereinigt wird.

Alle übrigen, nicht nachgeordneten Filtermodule werden als vorgelagerte Filtermodule bezeichnet, die bevorzugt alle parallel zueinander betrieben werden. Entsprechend liegen in einer Phase des Parallelbetriebs aller Filtermodule ausschließlich vorgelagerte Filtermodule vor.

Im Filtrationsbetrieb erfolgt ein Zuleiten von Unfiltrat wenigstens zu den vorgelagerten Filtermodulen, wobei dem nachgeordneten Filtermodul bevorzugt kein Unfiltrat oder wenigstens eine gegenüber der zu den vorgelagerten Filtermodulen zugeleiteten Menge verringerte Menge Unfiltrat zugeleitet wird. Bevorzugt erfolgt mit dem Nachordnen des Filtermoduls aber eine vollständige Trennung des nachgeordneten Filtermoduls zum Unfiltrat. Das erfindungsgemäße Zusammenführen des Filtrats aller Filtermodule bedeutet, dass sowohl das Filtrat des oder der vorgelagerten Filtermodule und das Filtrat des oder der nachgeordneten Filtermodule in die gemeinsame Filtratleitung eingeleitet wird.

Unter dem Reinigen eines Filtermoduls wird generell der Vorgang der Regeneration und dabei der zumindest teilweisen, bevorzugt weitestgehenden und besonders bevorzugt im Wesentlichen vollständigen Rückversetzung des Filtermoduls in den Ausgangszustand bzw. in einen im Wesentlichen retentatfreien und/oder trubfreien Zustand verstanden. Bevorzugt erfolgt das Reinigen des Filtermoduls durch Rückspülen. Weiterhin bevorzugt ist die Querstrom-Membranfiltrationsanlage derart aufgebaut und/oder die Filtermodule derart angeordnet, dass jedes Filtermodul einzeln und/oder unabhängig von den anderen Filtermodulen rückgespült werden kann. Besonders bevorzugt sind dazu getrennte Rückspülleitungen zum Zuleiten und/oder zum Wegleiten von Spülwasser für jedes Filtermodul und/oder zusätzliche Rückspülventile vorgesehen.

Ebenfalls bevorzugt sind alle Filtermodule derart innerhalb der Querstrom-Membranfiltrationsanlage angeordnet, dass jedes der Filtermodule einzeln, außerhalb des Filtrationsbetriebs und/oder von dem übrigen Teil der Querstrom-Membranfiltrationsanlage getrennt gereinigt werden kann. Insbesondere bevorzugt ist zum Reinigen das jeweilige Filtrationsmodul vollständig von den anderen, insbesondere den anderen im Filtrationsbetrieb befindlichen Filtrationsmodulen vollständig trennbar. Entsprechend sieht auch eine vorteilhafte Ausgestaltung der Erfindung vor, dass das Filtermodul während des Reinigens nicht zur Filtration betrieben wird und/oder aus dem Filtermodul während des Reinigens kein Unfiltrat entnommen wird und/oder dem Filtermodul während des Reinigens kein Retentat und/oder kein Unfiltrat zugeleitet wird.

Neben einer vollständigen Reinigung des zuvor nachgeschalteten Filtermoduls ist auch eine teilweise Reinigung denkbar und nachfolgend ein Weiterführen des Filtrationsbetriebs mit dem teilweise gereinigten Filtermodul, das dann bevorzugt als nachgelagertes Filtermodul verwendet wird. Gerade jedoch, um in kurzer Zeit eine größtmögliche Menge Trub austragen zu können, kann es auch sinnvoll sein, ein nachgeordnetes Filtermodul nur soweit zu reinigen, dass der überwiegende Teil des Trubs entfernt ist, was mit verhältnismäßig geringem Zeitaufwand möglich ist, und dieses teilgereinigte Filtermodul nachfolgend wieder, insbesondere als nachgeordnetes Filterelement zu schalten, um abermals schnellstmöglich eine große Menge Trub aufnehmen sowie dann wieder schnell auswaschen zu können.

Bevorzugt erfolgt eine Reinigung unter anderem aufgrund eines Erreichens der Belastungsgrenze des Filtermoduls. Diese Belastungsgrenze des Filtermoduls kann sich beispielsweise aus einem Unterschreiten eines Mindestwertes der Filterleistung und/oder aus einem Überschreiten eines maximalen Transmembrandrucks ergeben und/oder durch das Erreichen eines maximalen Trubvolumens in dem Filtermodul und/oder in der gesamten Querstrom-Membranfiltrationsanlage. Obwohl ein beliebiges Filtermodul gereinigt werden kann, ist es bevorzugt, dass insbesondere im kontinuierlichen, ununterbrochenen Filtrationsbetrieb ausschließlich das zuvor nachgeordnete Filtermodul gereinigt wird bzw. vor einer Reinigung das jeweilige Filtermodul zunächst nachgeordnet betrieben wird. Beim Beginn oder Ende des Filtrationsbetriebs sowie bei einem ganz besonders hohen Trubeintrag kann es jedoch auch notwendig sein, ein oder mehrere Filtermodule zu reinigen, die nicht zuvor nachgeordnet betrieben worden sind.

Bei dem Reinigen des nachgelagerten Filtermoduls ist wahlweise eine Unterbrechung des Filtrationsbetriebs oder ein Weiterführen des Filtrationsbetriebs ausschließlich mittels des oder der weiteren, insbesondere nicht in der Reinigung befindlichen Filtermodule vorgesehen. Eine Unterbrechung des Filtrationsbetriebs sieht dann wenigstens das Aussetzen des Betriebs des in Reinigung befindlichen Filtermoduls zur Filtration und insbesondere des gesamten Filtrationsbetriebs der gesamten Querstrom-Membranfiltrationsanlage vor, sodass aus den von der Unterbrechung betroffenen Filtermodulen, insbesondere aus allen Filtermodulen kein Filtrat ausgeleitet wird und/oder keinem dieser Filtermodule Unfiltrat und/oder Retentat zugeleitet wird.

Bei einem Weiterführen des Filtrationsbetriebs der Querstrom-Membranfiltrationsanlage während des Reinigens wenigstens eines Filtermoduls erfolgt der Filtrationsbetrieb ausschließlich mittels der weiteren, nicht in Reinigung befindlichen Filtermodule, d.h. ein in Reinigung befindliches Filtermodul nimmt über die Dauer der Reinigung nicht am Filtrationsbetrieb teil. Das Weiterführen des Filtrationsbetriebs erfolgt also nur mittels des oder der weiteren Filtermodule und ausschließlich des zuvor nachgeordneten, nun in Reinigung befindlichen Filtermoduls. Entsprechend stellt die Reinigung einen Betriebszustand eines Filtermoduls und der Filtrationsbetrieb einen weiteren Betriebszustand des Filtermoduls dar, wobei sich ein Filtermodul zugleich nur in einem einzigen Betriebszustand befinden kann und entsprechend eine Reinigung eines Filtermoduls während eines Betriebs zugleich zur Filtration ausgeschlossen ist. Entsprechend erfolgt bevorzugt ein Beginn des Betriebs des bisher nachgeordneten Filtermoduls, dann als vorgelagertes Filtermodul, nur nachfolgend der Reinigung bzw. nach Abschluss der Reinigung und nicht bereits zugleich mit der Reinigung.

Das Reinigen des Filtermoduls ist nicht ein Teil des Filtrationsbetriebs und insbesondere nicht ein Betriebszustand innerhalb des Filtrationsbetriebs. Das Reinigen eines Filtermoduls erfolgt außerhalb des Filtrationsbetriebs. Entsprechend ist ein in Reinigung befindliches Filtermodul bevorzugt nicht Bestandteil des den Filtrationsbetrieb ausführenden Teils der Querstrom-Membranfiltrationsanlage. Darüber hinaus erfolgt das Reinigen bevorzugt mit einer von dem Unfiltrat, dem Retentat und/oder dem Filtrat abweichenden Flüssigkeit. Insbesondere bevorzugt erfolgt das Reinigen mittels einer Reinigungsflüssigkeit, die besonders bevorzugt dem von den im Filtrationsbetrieb befindlichen, weiteren Filtermodulen getrennten Filtermodul zu Reinigungszwecken zugeleitet wird. Dieses Zuleiten erfolgt dabei ebenfalls bevorzugt vollständig vom Unfiltrat und/oder dem Retentat der weiteren, im Filtrationsbetrieb befindlichen Filtermodule getrennt. Entsprechend ist auch bevorzugt, dass ein Ableiten der Reinigungsflüssigkeit von dem Filtrat und/oder dem Retentat der weiteren, im Filtrationsbetrieb befindlichen Filtermodule getrennt erfolgt. Entsprechend stellt ein Einleiten von Unfiltrat, Retentat und/oder Filtrat in ein Filtermodul, unabhängig von der Flussrichtung, bevorzugt kein Reinigen des Filtermoduls dar.

Das Verfahren sieht bevorzugt vor, dass jedes der Filtermodule der Querstrom-Membranfiltrationsanlage im Verfahrensverlauf nachgeordnet betrieben wird, wobei hier zunächst nur auf die Filtermodule Bezug genommen wird, die nachgelagert und nachgeordnet betrieben werden können. Es ist zudem denkbar, dass die Querstrom-Membranfiltrationsanlage weitere Filtermodule, beispielsweise als Vorfilter oder für eine parallele, vom erfindungsgemäßen Verfahren unabhängige, weitere Filteranlage aufweist, die entsprechend auch nicht in den wechselnd nachgeordneten Betrieb der Filtermodule einbezogen ist und häufig auch nicht einbezogen werden kann. Bevorzugt erfolgt ein Betrieb mit einem iterierten Nachordnen aller hierzu verfügbaren Filtermodule, d.h. mit einem wechselnden, insbesondere einer Reihenfolge nach wechselndem Betrieb, der einzelnen Filtermodule jeweils als nachgeordnetes Filtermodul.

Eine vorteilhafte Weiterbildung des Verfahrens zur Filtration, das mit einer Querstrom-Membranfiltrationsanlage mit wenigstens drei Filtermodulen durchgeführt wird, sieht vor, dass während der Reinigung des bislang nachgeordneten Filtermoduls ein weiteres, bislang vorgelagertes Filtermodul nachgeordnet wird, wobei bei der Reinigung des bislang nachgeordneten Filtermoduls der Filtrationsbetrieb bevorzugt kontinuierlich und/oder unterbrechungsfrei fortgeführt wird. Bevorzugt erfolgt das Nachordnen des bislang vorgelagerten Filtermoduls unmittelbar mit dem Trennen des zu reinigenden Filtermoduls von der Retentatleitung und/oder mit dem Herausnehmen des zu reinigenden Filtermoduls aus dem Filtrationsbetrieb. Alternativ kann das Nachordnen eines weiteren Filtermoduls aber auch zu einem beliebigen, späteren Zeitraum erfolgen, sodass zeitweilig ein Betrieb mit nur vorgelagerten und somit zueinander parallelen Filtermodulen erfolgt. Weiterhin bevorzugt erfolgt ein vollständig kontinuierlicher Betrieb bei dem besonders bevorzugt durchgängig ein nachgelagertes Filtermodul vorhanden ist und ganz besonders bevorzugt nur ein einziges nachgeordnetes Filtermodul vorliegt. Dabei können alle weiteren, nicht in Reinigung befindlichen Filtermodule als vorgelagerte Filtermodule betrieben werden oder alternativ kann ein oder mehrere Filtermodule in einem Standby-Zustand bereitgehalten werden. Das Bereithalten wenigstens eines einzelnen Filtermoduls ist insbesondere bevorzugt, um eine besonders langdauernde und/oder besonders vollständige Reinigung eines der Filtermodule ohne einen Leistungsverlust der Gesamtanlage zu ermöglichen.

Wenn die Querstrom-Membranfiltrationsanlage dagegen nur zwei Filtermodule aufweist bzw. aktuell nur zwei Filtermodule betrieben werden können, wird bei einer bevorzugten Ausgestaltung des Verfahrens zur Filtration während des Reinigens des bislang nachgeordneten Filtermoduls der Filtrationsbetrieb unterbrochen oder ausschließlich mit dem verbleibenden Filtermodul weitergeführt und/oder der Reinigung nachfolgend das gereinigte Filtermodul als vorgelagertes Filtermodul betrieben. Generell ist bevorzugt, dass ein Filtermodul nach der Reinigung als vorgelagertes Filtermodul betrieben und entsprechend ein anderes, bisher vorgelagert betriebenes Filtermodul nachgeordnet wird.

Um dauerhaft eine ausreichende Filterleistung bereitstellen zu können, ist es bevorzugt, dass zu jedem Zeitpunkt des Betriebs der Querstrom-Membranfiltrationsanlage lediglich ein einziges Filtermodul nachgeordnet ist und/oder sich in der Reinigung befindet, insbesondere unabhängig von der Anzahl der Filtermodule der Querstrom-Membranfiltrationsanlage. Auf diese Weise können die Teile der Querstrom-Membranfiltrationsanlage zur Reinigung der Filtermodule so klein wie möglich, nämlich maximal zur Reinigung eines einzigen Filtermoduls, dimensioniert werden, sodass eine besonders kompakte Bauweise, geringe Herstellungskosten sowie ein besonders ressourceneffizienter Betrieb erreicht werden können. Darüber hinaus wird zu jedem Zeitpunkt des Filtrationsbetriebs eine größtmögliche Filterleistung erreicht bzw. die aktuell zur Verfügung stehende Filterleistung ist zu keinem Zeitpunkt kleiner als die Filterleistung aller Filtermodule abzüglich dem einzigen, ggf. gerade in Reinigung befindlichen Filtermodul.

Eine vorteilhafte Weiterbildung des Verfahrens zur Filtration sieht vor, dass die Querstrom-Membranfiltrationsanlage wenigstens vier Filtermodule und/oder maximal sechs Filtermodule aufweist und durchgängig wenigstens zwei vorgelagerte Filtermodule parallel zueinander sowie in Reihe mit einem nachgelagerten Filtermodul betrieben werden und/oder sich genau ein Filtermodul in Reinigung befindet.

Obwohl eine Verfahrensführung denkbar ist, bei der zu jedem Zeitpunkt ein Filtermodul gereinigt wird und/oder nachgeordnet ist, kann es sinnvoll sein, bedarfsweise oder periodisch das Verfahren zur Filtration derart zu führen, dass während des Filtrationsbetriebs zeitweilig alle Filtermodule als vorgelagerte Filtermodule parallel zueinander betrieben werden. Ein solcher Betrieb ist besonders vorteilhaft im Wechsel mit einem Betrieb, bei dem zeitweilig wenigstens ein, insbesondere ein einziges Filtermodul nachgeordnet wird und/oder sich in Reinigung befindet. Der Wechsel zwischen einem Parallelbetrieb, einem Betrieb mit einem nachgeordneten Filtermodul und/oder mit einem Filtermodul in Reinigung kann in beliebiger Reihenfolge und/oder beliebig oft erfolgen, wobei eine Betriebsreihenfolge bevorzugt wird, bei der nach Abschluss der Reinigung eines Filtermoduls zunächst ein Parallelbetrieb erfolgt, dann eine Nachordnung eines Filtermoduls vorgenommen wird und anschließend das nachgeordnete Filtermodul gereinigt wird. Bei der Reinigung erfolgt dann besonders bevorzugt mit den übrigen Filtermodulen ein Parallelbetrieb. Besonders bevorzugt erfolgt ein Betrieb, bei dem entweder alle Filtermodule parallel zueinander betrieben werden oder ein nachgeordnetes Filtermodul genutzt wird, unabhängig davon, ob ein weiteres Filtermodul gereinigt wird.

Würde die den Filtermodulen zugeführte Unfiltratmenge einzig auf die vorgelagerten Filtermodule abgestimmt sein, läge im Gesamtsystem und insbesondere im nachgeordneten Filtermodul ein verringerter Druck bzw. ein geringerer Durchsatz als der für die Filtermodule vorgesehene ideale Filterdurchsatz vor, was die Effizienz und Gesamtleistung der Querstrom-Membranfiltrationsanlage senken würde. Entsprechend ist eine Ausgestaltung des Verfahrens zur Filtration bevorzugt, bei der die Menge des den vorgelagerten Filtermodulen zugeführten Unfiltrats größer als der maximale bzw. ideale Filterdurchsatz der vorgelagerten Filtermodule ist, sodass am Retentatausgang der vorgelagerten Filtermodule ein erhöhter Retentatdruck entsteht bzw. sich die Retentatmenge erhöht und dadurch die vorgelagerten Filtermodule bereits gespült werden. Dabei entspricht die allen vorgelagerten Filtermodulen überschüssig zugeleitete Retentatmenge bevorzugt im Wesentlichen dem maximalen bzw. idealen Filterdurchsatz des nachgeordneten Filtermoduls, wenigstens aber 50 %, besonders bevorzugt 75 % und ganz besonders bevorzugt 85 % des maximalen bzw. idealen Filterdurchsatzes. Der maximale Filterdurchsatz ist dabei das maximal innerhalb eines definierten Zeitraums filterbare Flüssigkeitsvolumen.

Dies bedeutet mit anderen Worten, dass bevorzugt den vorgelagerten Filtermodulen eine Menge an Unfiltrat zugeleitet wird, die im Wesentlichen dem maximalen bzw. idealen Filterdurchsatz aller Filtermodule einschließlich des nachgeordneten Filtermoduls entspricht, sodass nach wie vor die maximale bzw. ideale Filterleistung aller Filtermodule erreicht bzw. ausgeschöpft wird. Zudem ergibt sich durch eine Erhöhung der zugeleiteten Menge an Unfiltrat zu den vorgelagerten Filtermodulen ein Reinigungs- bzw. Auswascheffekt, da im Retentat zurückgehaltene Stoffe und Trub aus den vorgelagerten Filtermodulen an das nachgeordnete Filtermodul weiterleitet werden, wodurch die Konzentration der zurückgehaltenen Stoffe und des Trubs sinkt und die Filterleistung in den vorgelagerten Filtermodulen steigt.

Um eine besonders individuelle und/oder dynamische Steuerung des Betriebs zu ermöglichen, kann bei einer vorteilhaften Weiterbildung des Verfahrens zur Filtration vorgesehen sein, dass der Zufluss des Unfiltrats und/oder der Abfluss des Retentats und/oder des Filtrats für jedes vorgelagerte Filtermodul individuell mittels eines entsprechenden Ventils gesteuert oder geregelt wird. Der Betrieb der Ventile erfolgt dabei bevorzugt über die Steuervorrichtung der Querstrom-Membranfiltrationsanlage. Eine Steuerung bzw. Regelung erfolgt dabei bevorzugt zum Erreichen der Belastungsgrenze des jeweiligen Filtermoduls zu einem geplanten Zeitpunkt, insbesondere derart, dass eine kontinuierliche Reinigung der einzelnen Filtermodule der Reihenfolge nach und/oder mit etwa gleichem zeitlichen Abstand zueinander erfolgt.

Das Nachordnen eines Filtermoduls bzw. die Auswahl des nachzuordnenden Filtermoduls kann grundsätzlich nach beliebigen Kriterien und unter Berücksichtigung beliebig vieler Faktoren erfolgen. Im einfachsten Fall erfolgt das Nachordnen und/oder die Reinigung der Filtermodule in einer gleichbleibenden Reihenfolge und/oder im kontinuierlichen Wechsel der einzelnen Filtermodule. Daneben ist auch eine Gestaltung des Verfahrens denkbar, bei der das Filtermodul mit der längsten Betriebsdauer seit einer Reinigung und/oder das Filtermodul mit der aktuell geringsten Filterleistung und/oder das Filtermodul mit der größten Trubgehalt zum Nachordnen ausgewählt wird. Bei einem Beginn des Filtrationsbetriebs, bei einem Starten der Querstrom-Membranfiltrationsanlage und/oder wenn alle Filtermodule sich in einem identischen Zustand befinden und dabei insbesondere alle gleichermaßen gereinigt sind, kann das nachzuordnende Filtermodul grundsätzlich beliebig gewählt werden. Die längste Betriebsdauer eines Filtermoduls seit der letzten Reinigung kann dabei beliebig, bevorzugt jedoch mittels in der Steuervorrichtung gespeicherten Daten, bestimmt werden. Der Trubgehalt und/oder die aktuelle Filterleistung eines Filtermoduls kann mittels eines beliebigen Sensors bestimmt werden.

Eine bevorzugte Ausgestaltung des Verfahrens zur Filtration sieht vor, dass wenigstens zeitweilig während des Filtrationsbetriebs ein Anteil des Retentats in den vorgelagerten Unfiltrattank rückgeleitet wird. Der in den Unfiltrattank rückgeleitete Anteil entspricht dabei bevorzugt in etwa der maximalen bzw. idealen Filterleistung eines Filtermoduls und/oder der Menge an Retentat, die im Betrieb mit einem nachgeordneten Filtermodul diesem nachgeordneten Filtermodul zugeleitet wird. Um eine effiziente Steuerung der Rückleitung zu ermöglichen, ist bevorzugt zwischen der Retentatleitung und dem Unfiltrattank und/oder einem Retentatpuffertank ein Ventil angeordnet, das besonders bevorzugt mittels der Steuervorrichtung der Querstrom-Membranfiltrationsanlage ansteuerbar ist.

Obwohl das zumindest teilweise Rückleiten zu einem beliebigen Zeitpunkt und für eine beliebige Dauer erfolgen kann, ist es bevorzugt, dass ein Rückleiten eines Anteils des Retentats in den Unfiltrattank nur dann erfolgt, wenn alle Filtermodule als vorgelagerte Filtermodule parallel zueinander betrieben werden und/oder wenn eine Reinigung eines Filtermoduls erfolgt, sodass die Überschussmenge aufgrund der fehlenden Filterleistung des gerade in Reinigung befindlichen Filtermoduls einfach in den Unfiltrattank zurückgeführt werden kann. Zusätzlich oder alternativ kann ein Rückleiten eines Anteils des Retentats oder des gesamten Retentats auch dann erfolgen, wenn der Filtratabfluss aus den Filtermodulen verringert oder ganz unterbrochen ist, unter anderem, um einen kontinuierlichen Fluss im Unfiltrattank, der Unfiltratleitung und/oder der Retentatleitung aufrecht zu erhalten und/oder ein Absetzen des Trubs in diesen Bereich zu verhindern, was insbesondere ein Wiederanfahren der Querstrom-Membranfiltrationsanlage erheblich erschweren kann. Darüber hinaus kann ein solches Rückleiten, insbesondere bei einer verringerten oder unterbrochenen Filtratabnahme sinnvoll sein, um die Kühlung aufrecht zu erhalten.

Durch ein zeitweiliges Rückleiten eines Retentatanteils in den Unfiltrattank oder alternativ in einen Puffertank kann die Rate der Trubansammlung innerhalb der Filtermodule verringert werden, sodass ein effizienterer Filtrationsbetrieb erfolgen kann. Die Trubansammlung im Unfiltrattank kann dann nachfolgend gezielt mittels eines nachgeordneten Filtermoduls zügig entfernt werden. Weiterhin kann es sinnvoll sein, den Unfiltrattank periodisch oder bedarfsweise teilweise, zu wenigstens 80 % oder im Wesentlichen vollständig leer zu fahren, um eine entsprechende Reinigung und/oder einen hinreichenden Trubaustrag zu erreichen. Dies erfolgt besonders bevorzugt in einem Filtrationsbetrieb mit einem nachgeordneten Filtermodul. Entsprechendes gilt auch für einen gegebenenfalls vorhandenen Retentatpuffertank. Auf diese Weise kann insbesondere im laufenden Betrieb eine Reinigung und/oder ein Trubaustrag aus dem Unfiltrattank und/oder Retentatpuffertank erfolgen. Zudem ist es bevorzugt, dass das nachgelagerte Filtermodul bei einem Wechsel von einem Betrieb mit einem nachgelagerten Filtermodul in einen Betrieb mit einem zumindest teilweisen Rückleiten von Retentat sofort gereinigt wird.

Schließlich ist bei einer bevorzugten Ausgestaltung des Verfahrens zur Filtration vorgesehen, dass den Filtermodulen ein mit der Filtratleitung verbundener Filtrattank nachgelagert ist, der bevorzugt wenigstens einen Sensor zum mittelbaren oder unmittelbaren Erfassen des Füllstandes aufweist und die Steuerung der Häufigkeit eine Reinigung eines der Filtermodule unter Berücksichtigung des Füllstandes des Filtrattanks erfolgt. Dabei ist der Filtrattank, der als Filtratpuffertank wirkt, u.a. zum Ausgleich des fehlenden Filtratflusses während der Reinigung eines Filtermoduls vorgesehen, sodass auch ein kontinuierlicher Betrieb von der Querstrom-Membranfiltrationsanlage nachgeordneten Anlagen gewährleistet ist.

Eine Reinigung kann dabei insbesondere dann ausgelöst werden, wenn der Filtrattank einen definierten Höchststand erreicht, sodass die Flussrate des zufließenden Filtrats aufgrund einer eingeleiteten Reinigung eines Filtermoduls verringert wird. Denkbar ist dabei grundsätzlich auch eine Reinigung mehrerer Filtermodule zugleich, wenn eine entsprechend starke Verringerung des Filtratzuflusses erforderlich ist. Auf diese Weise kann dennoch ein kontinuierlicher Betrieb der Querstrom-Membranfiltrationsanlage gewährleistet werden. Schließlich ist bevorzugt zwischen der Filtratleitung und dem Filtrattank ein Ventil angeordnet, das besonders bevorzugt mittels der Steuervorrichtung der Querstrom-Membranfiltrationsanlage ansteuerbar ist.

Mehrere Ausführungsbeispiele einer erfindungsgemäßen Querstrom-Membranfiltrationsanlage sowie der Durchführung eines erfindungsgemäßen Verfahrens zur Filtration werden nachfolgend mit Bezug auf die Zeichnungen näher erläutert. Es zeigen:
- Fig. 1a: eine schematische Darstellung einer Querstrom-Membranfiltrationsanlage mit einem ersten, nachgeordnet betriebenen Filtermodul,
- Fig. 1b: eine schematische Darstellung der in Fig. 1 dargestellten Querstrom-Membranfiltrationsanlage mit dem ersten Filtermodul in Reinigung,
- Fig. 1c: eine schematische Darstellung der in Fig. 1 dargestellten Querstrom-Membranfiltrationsanlage mit dem zweiten Filtermodul im nachgeordneten Betrieb,
- Fig. 1d: eine schematische Darstellung der in Fig. 1 dargestellten Querstrom-Membranfiltrationsanlage mit dem zweiten Filtermodul in Reinigung,
- Fig. 1e: eine schematische Darstellung der in Fig. 1 dargestellten Querstrom-Membranfiltrationsanlage mit dem dritten Filtermodul im nachgeordneten Betrieb,
- Fig. 1f: eine schematische Darstellung der in Fig. 1 dargestellten Querstrom-Membranfiltrationsanlage mit dem dritten Filtermodul in Reinigung,
- Fig. 2: eine schematische Darstellung der in Fig. 1 dargestellten Querstrom-Membranfiltrationsanlage mit allen drei Filtermodulen im Parallelbetrieb,
- Fig, 3: eine schematische Darstellung der in Fig. 1 dargestellten Querstrom-Membranfiltrationsanlage einschließlich eines vorgelagerten Unfiltrattanks sowie mit allen drei Filtermodulen im Parallelbetrieb,
- Fig. 4: ein Diagramm der Trubmenge im Gesamtsystem sowie in den einzelnen Filtermodulen in Funktion der Betriebszeit bei einem ausschließlich parallelen Betrieb der Filtermodule,
- Fig. 5: ein Diagramm der Trubmenge im Gesamtsystem sowie in den einzelnen Filtermodulen in Funktion der Betriebszeit bei einem Betrieb mit durchgängig einem nachgeordneten Filtermodul,
- Fig. 6: ein Diagramm der Trubmenge im Gesamtsystem sowie in den einzelnen Filtermodulen in Funktion der Betriebszeit bei zunächst einem Parallelbetrieb aller Filtermodule nach der Reinigung eines Filtermoduls und nachfolgend dann einem Betrieb mit einem nachgeordneten Filtermodul bis zur Reinigung dieses Filtermoduls, und
- Fig. 7: eine schematische Darstellung einer weiteren Ausführung einer Querstrom-Membranfiltrationsanlage mit einer Retentatsammelleitung der vorgelagerten Filtermodule und jeweils einer Retentatzuleitung zu den Filtermodulen zum nachgeordneten Betrieb.

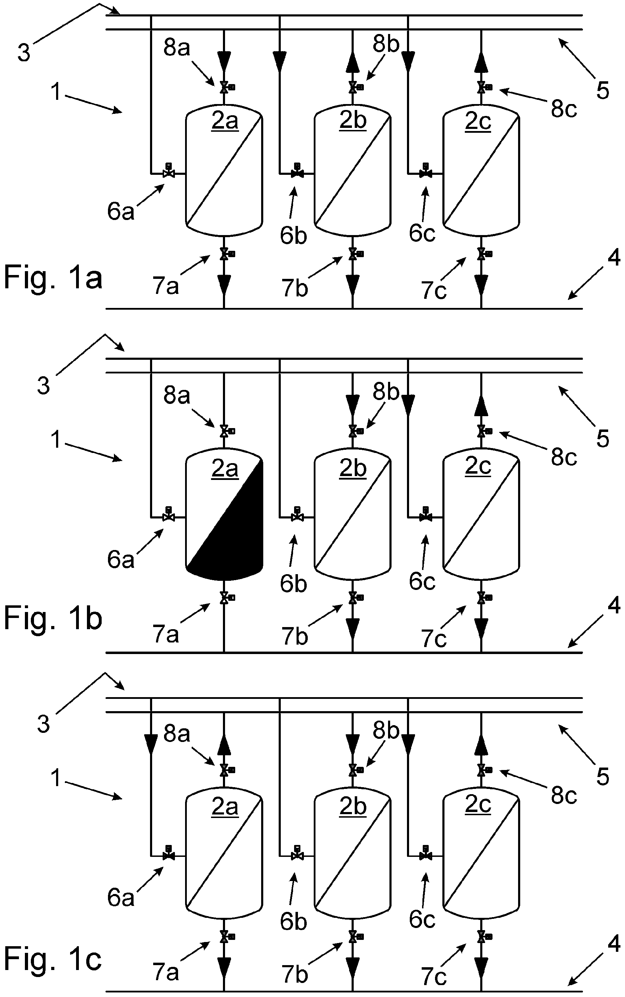

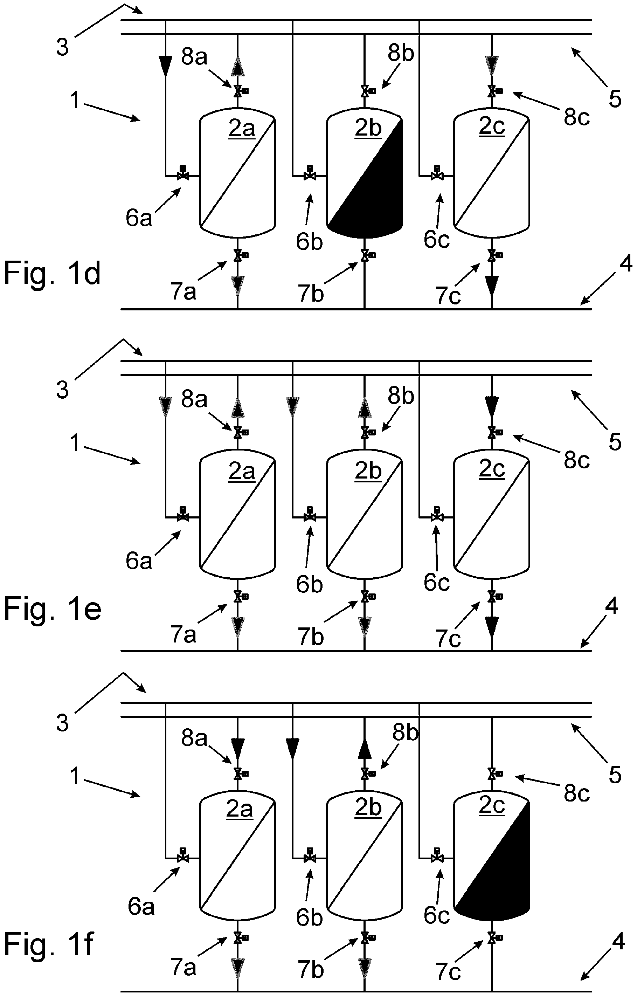

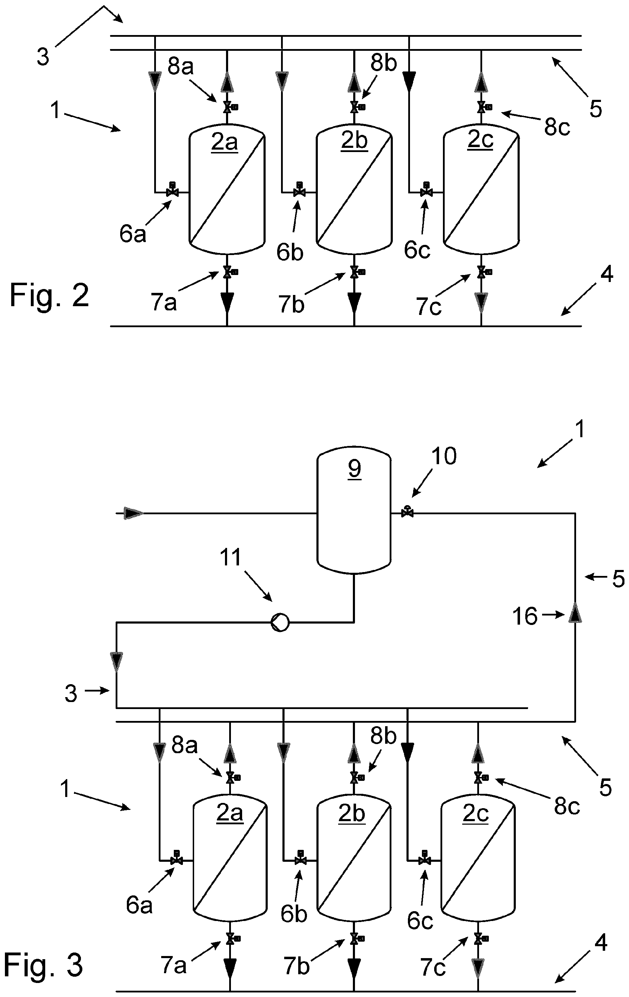

Die einzelnen Verfahrensschritte eines Verfahrens zur Filtration von Bier in einer Brauerei wird in den Figuren 1 a - f sowie 2 und 3 verdeutlicht. Das Verfahren wird mittels einer Querstrom-Membranfiltrationsanlage 1 durchgeführt, die einen Unfiltrattank 9 für das noch ungefilterte, naturtrübe Bier mit einem Volumen von 30 Hektoliter aufweist. Mittels einer Pumpe 11 wird das Bier aus dem Unfiltrattank 9 in einer Unfiltratleitung 3 drei Filtermodulen 2a - c zugeleitet (siehe Fig. 3).

Die drei Filtermodule 2a - c sind identisch zueinander gebildet und weisen jeweils ein Volumen von 400 Litern auf. Jedes Filtermodul 2a - c weist eine Filtermembran auf und ist zur Verwendung im Querstromverfahren gebildet. Das mittels den drei Filtermodulen 2a - c gefilterte Bier wird an eine gemeinsame Filtratleitung 4 abgegeben und von dort zu einem nachgelagerten Filtratlager.

Weiterhin ist jedes der drei Filtermodule 2a - c mit einer gemeinsamen Retentatleitung 5 verbunden, durch die das Retentat des Querstrom-Filterverfahrens aus dem jeweiligen Filtermodul 2a - c ausgeleitet werden kann. Zum Betrieb des Verfahrens ist zudem in jeder der Unfiltratleitung 3, der Filtratleitung 4 und der Retentatleitung 5 im Bereich des jeweiligen Filtermoduls 2a - c ein Ventil, nämlich das Unfiltratventil 6a - c, das Filtratventil 7a - c und das Retentatventil 8a - c, angeordnet.

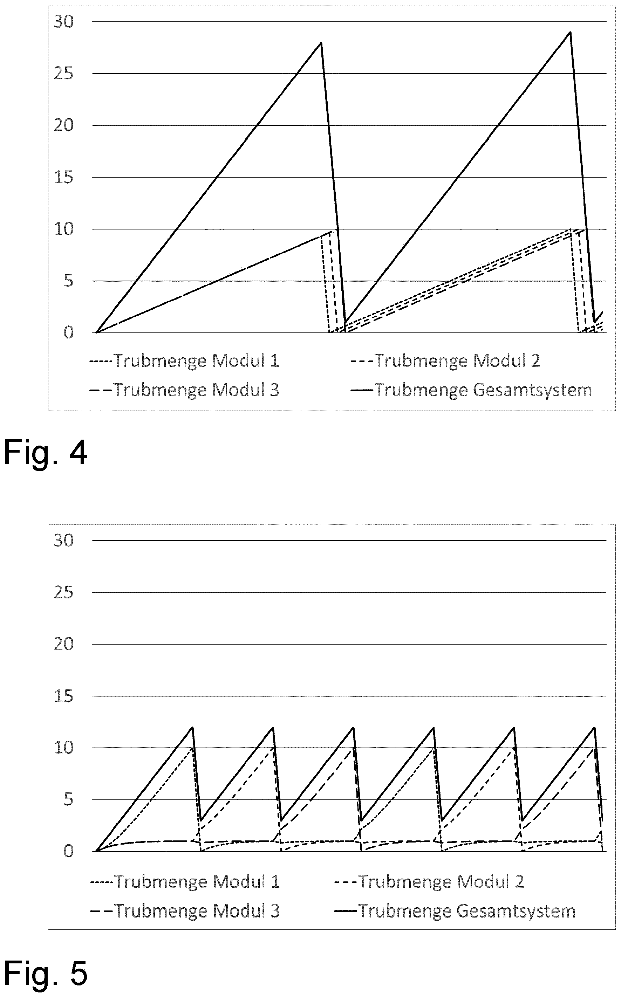

Die Querstrom-Membranfiltrationsanlage kann in unterschiedlicher Weise betrieben werden. Die einfachste und aus dem Stand der Technik bekannte Betriebsart wäre es, alle Filtermodule 2a - c durchgängig parallel zueinander zu betreiben, wie es in der Fig. 2 dargestellt ist. Sobald ein Filtermodul 2a - c seine Belastungsgrenze erreicht, d.h., sobald das Filtermodul 2a - c sein maximales Trubvolumen erreicht hat oder die Filterleistung unter einen technischwirtschaftlichen Schwellenwert gesunken ist, erfolgt dann die Reinigung des jeweiligen Filtermoduls 2a - c. Das Trubvolumen bzw. die Trubmenge im Gesamtsystem sowie in den einzelnen Filtermodulen 2a - c als Funktion der Betriebszeit ist für diese Betriebsart in Fig. 4 dargestellt, wobei unmittelbar erkennbar ist, dass die Trubmenge in allen drei Filtermodulen 2a - c gleichmäßig ansteigt und die Trubmenge im Gesamtsystem nach kurzer Zeit entsprechend hoch ist. Zudem ist bei dieser Betriebsart eine Reinigung aller Filtermodule 2a - c zur etwa gleichen Zeit notwendig, sodass ein kontinuierlicher Betrieb hier nur schwer möglich ist bzw. die Filterleistung während der Betriebszeit stark schwankt.

Eine erste, erfindungsgemäße Betriebsart ist in den Figuren 1a - f dargestellt, wobei es sich um einen wechselnd nachgeordneten Betrieb handelt. Hierbei wird anfänglich das Unfiltratventil des ersten Filtermoduls 2a geschlossen. Über die Unfiltratleitung 3 wird nur den beiden Filtermodulen 2b und 2c Unfiltrat zugeleitet, wobei jedoch die zugeleitete Menge einer Menge entspricht, die der idealen Filterleistung von drei Filtermodulen 2a - c entspricht. Im vorliegenden Beispiel haben die Filtermodule 2a - c jeweils eine Filterleistung von etwa 72 Hektoliter pro Stunde, sodass den beiden Filtermodulen 2b und 2c hier etwa 216 Hektoliter pro Stunde zugeleitet werden. Da das Unfiltratventil 6a des ersten Filtermoduls 2a geschlossen ist, gelangt nun das überschüssige Retentat der beiden anderen Filtermodule 2b und 2c, das aufgrund der erhöhten, zugleiteten Unfiltratmenge vorliegt, über die gemeinsame Retentatleitung 5 in das erste, nachgeordnet betriebene Filtermodul 2a, sodass der gesamte, herausgefilterte Trub aus den beiden anderen Filtermodulen 2b und 2c sich im Filtermodul 2a ansammelt. Somit befindet sich das Filtermodul 2a nun in einer Anordnung in Reihe zu den davor sowie zueinander parallel angeordneten Filtermodulen 2b und 2c. Aus allen drei Filtermodulen 2a - c wird dabei nach wie vor Filtrat in die Filtratleitung 4 eingeleitet.

Aufgrund dieser hohen Trubbelastung ist die Belastungsgrenze des ersten Filtermoduls 2a deutlich schneller erreicht als die der beiden anderen Filtermodule 2b und 2c, sodass entsprechend früher eine Reinigung des ersten Filtermoduls 2a notwendig ist. Dazu werden, wie in Fig. 1b dargestellt, auch die beiden anderen Ventile dieses Filtermoduls 2a, das Retentatventil 8a und das Filtratventil 7a geschlossen und das Filtermodul 2a durch Rückspülen gereinigt, wobei zügig der darin enthaltene Trub ausgetragen und die Membran im Inneren freigespült wird.

Unmittelbar mit der Reinigung des ersten Filtermoduls 2a wird, wie in Fig. 1c dargestellt, das zweite Filtermodul 2b dem dritten Filtermodul 2c nachgeordnet. Sobald das erste Filtermodul 2a gereinigt ist, wird dieses dann ebenfalls in den vorgelagerten Betrieb gebracht und dazu parallel zu dem dritten Filtermodul 2c betrieben. Es sammelt sich nun maßgeblich Trub im zweiten Filtermodul 2b, während die anderen beiden Filtermodule 2a und 2c sogar teilweise freigespült werden. Sobald die Belastungsgrenze des zweiten Filtermoduls 2b erreicht ist, wird auch dieses gereinigt, wie es in Fig. 1d dargestellt ist. Schließlich wird dieser Ablauf auch mit dem dritten Filtermodul 2c als nachgeordnetes Filtermodul wiederholt, sodass alle Filtermodule 2a - c nun einmal nachgeordnet betrieben wurden. Anschließend beginnt der Zyklus abermals mit dem ersten Filtermodul 2a im nachgeordneten Betrieb.

Das Trubvolumen bzw. die Trubmenge im Gesamtsystem sowie in den einzelnen Filtermodulen 2a - c als Funktion der Betriebszeit ist für diese Betriebsart in Fig. 5 dargestellt, wobei unmittelbar erkennbar ist, dass gegenüber dem Verfahren der Fig. 4 die Trubmenge im Gesamtsystem zu jedem Zeitpunkt deutlich niedriger ist. Zudem ist zu erkennen, dass das Hinzufügen eines nachgeordneten Filtermoduls 2a - c zu einer Absenkung der Trubmenge in den anderen Filtermodulen 2a - c führt, da hier ein teilweises Freispülen erfolgt. Die Filterleistung ist im zeitlichen Verlauf deutlich gleichbleibender, als bei einem reinen Parallelbetrieb der Filtermodule 2a - c.

Schließlich ist aber auch eine Kombination eines Betriebs mit einem nachgeordneten Filtermodul 2a - c und einem Parallelbetrieb der Filtermodule 2a - c denkbar. Dazu wird - am Beispiel der Situation in den Figuren 1 a - c - nicht wie zuvor unmittelbar mit dem Reinigen eines Filtermoduls 2a ein weiteres Filtermodul 2b unmittelbar nachgeordnet, sondern es erfolgt weiterhin ein Parallelbetrieb der anderen, vorgelagerten Filtermodule 2b und 2c. Selbst nach dem Reinigen des ersten Filtermoduls 2a wird dieses ebenfalls in den Parallelbetrieb aufgenommen, sodass alle drei Filtermodule 2a - c identisch und parallel zueinander betrieben werden (siehe Fig. 2).

Erst nach einer gewissen Betriebsdauer bzw. sobald eines der Filtermodule eine zuvor festgelegte Grenze der enthaltenen Trubmenge bzw. der Verringerung der Filterleistung erreicht hat, wird in den nachgeordneten Betrieb übergegangen, wobei das Filtermodul 2a -c mit der geringsten Filterleistung und/oder der höchsten Trubmenge nachgeordnet, also in Reihe zu den anderen beiden Filtermodulen 2a und 2b, durch Schließen des Unfiltratventils 6c angeordnet wird.

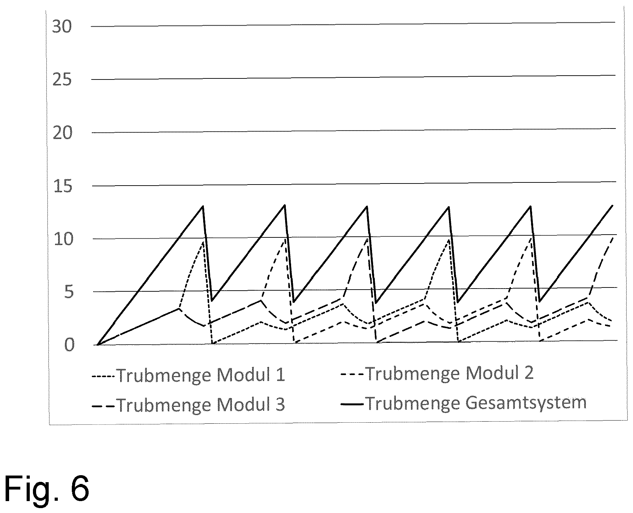

Das Trubvolumen bzw. die Trubmenge im Gesamtsystem sowie in den einzelnen Filtermodulen 2a - c als Funktion der Betriebszeit ist für diese Betriebsart in Fig. 6 dargestellt. Hierbei ist gut erkennbar, dass eine besonders individuelle Steuerung des Verfahrens durch Auswahl des Zeitpunktes des Umschaltens vom parallelen Betrieb in einen nachgeordneten Betrieb möglich ist. Schließlich ist es bevorzugt, insbesondere wenn alle gerade nicht in Reinigung befindlichen Filtermodule 2a - c parallel betrieben werden, dass während einer Reinigung eines der Filtermodule 2a - c ein Unfiltrattankventil 10 in der Retentatleitung 5 im Bereich des Unfiltrattanks 9 wenigstens teilweise geöffnet wird, sodass eine Menge des Unfiltrats, die der Filterleistung des gerade in Reinigung befindlichen Filtermoduls 2a - c entspricht, in den Unfiltrattank 9 zurückfließen kann und so, trotz des Fehlens eines Filtermoduls 2a - c, der Druck im Gesamtsystem bei gleicher Leistung der Pumpe 11 in etwa konstant gehalten werden kann. Dies vereinfacht die Regelung des Betriebs. Zudem verhindert die gleichbleibende Fließgeschwindigkeit des Unfiltrats und des Retentats ein Absetzen von Partikeln und Trub in der Unfiltratleitung 3, der Retentatleitung 5 sowie in den Filtermodulen 2a - c, was ansonsten ein Wiederanfahren bzw. Wiederhochfahren der Querstrom-Membranfiltrationsanlage 1 deutlich erschweren würde.

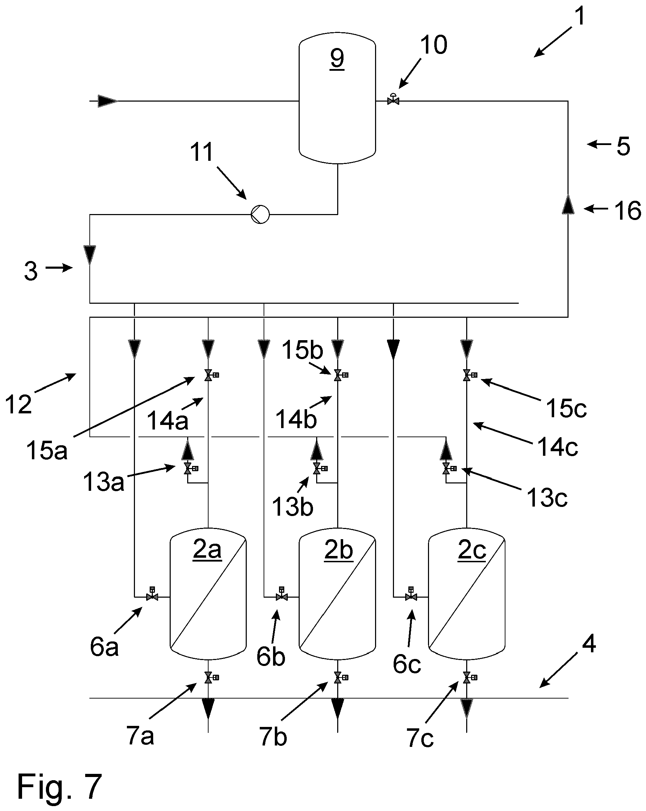

Eine in der Fig. 7 schematisch dargestellte, weitere Ausführung einer Querstrom-Membranfiltrationsanlage 1 unterscheidet sich von der ersten Ausführung im Wesentlichen darin, dass nicht alle Filtermodule 2a-c direkt an eine einzige Retentatleitung 5 angeschlossen sind, sondern an jedem Filtermodul 2a-c bzw. jedem Filtermodul 2a-c nachfolgend einerseits eine gemeinsame Retentatsammelleitung 12 zum Ableiten des Retentats aller vorgelagerten Filtermodule 2a-c und andererseits jeweils eine Retentatzuleitung 14a-c zum Zuleiten des gesammelten Retentats, insbesondere aus der Retentatsammelleitung 12, zu dem oder den nachgeordnet betriebenen Filtermodulen 2a-c angeordnet ist.

Um einen solchen Betrieb und insbesondere das gezielte Leiten des Retentats von den vorgelagerten Filtermodulen 2a-c zu dem oder den nachgelagerten Filtermodulen 2a-c zu ermöglichen, ist zwischen dem jeweiligen Filtermodul 2a-c und der Retentatsammelleitung 12 jeweils ein Retentatableitventil 13a-c angeordnet und jede Retentatzuleitung 14a-c weist ein Retentatzuleitventil 15a-c auf. Die Retentatsammelleitung 12 geht dabei im Bereich eines Retentatrückflussventils 16 in die Retentatleitung 5 über, mittels der das Retentat zu dem Unfiltrattank 9 rückgeleitet werden kann. Weiterhin zweigen die Retentatzuleitungen 14a-c jeweils von der Retentatsammelleitung 12 ab.

### Bezugszeichenliste

- 1: Querstrom-Membranfiltrationsanlage
- 2a-c: Filtermodule
- 3: Unfiltratleitung
- 4: Filtratleitung
- 5: Retentatleitung
- 6a-c: Unfiltratventil
- 7a-c: Filtratventil
- 8a-c: Retentatventil
- 9: Unfiltrattank
- 10: Unfiltrattankventil
- 11: Pumpe
- 12: Retentatsammelleitung
- 13a-c: Retentatableitventil
- 14a-c: Retentatzuleitung
- 15a-c: Retentatzuleitventil
- 16: Retentatrückflussventil

## Patentansprüche

1. Verfahren zur Filtration von Flüssigkeiten in einer Querstrom-Membranfiltrationsanlage (1), die wenigstens zwei Filtermodule (2a, 2b, 2c) aufweist, denen jeweils ein Unfiltrat aus einer gemeinsamen Unfiltratleitung (3) zugeleitet wird, die das Filtrat jeweils in eine gemeinsame Filtratleitung (4) abgeben und die alle mittels einer gemeinsamen Retentatleitung (5) untereinander verbunden sind, mit den Verfahrensschritten:
- Nachordnen eines der Filtermodule (2a, 2b, 2c) gegenüber den weiteren, vorgelagerten Filtermodulen (2a, 2b, 2c) und dazu Leiten des Retentats aller vorgelagerten Filtermodule (2a, 2b, 2c) durch die Retentatleitung (5) in das nachgeordnete Filtermodul (2a, 2b, 2c),
- Durchführen des Filtrationsbetriebs und dabei Zuleiten von Unfiltrat zu den vorgelagerten Filtermodulen (2a, 2b, 2c) und Zusammenführen des Filtrats aller Filtermodule (2a, 2b, 2c), bis eine Reinigung des nachgeordneten Filtermoduls (2a, 2b, 2c) begonnen wird und/oder aufgrund eines Erreichens der Belastungsgrenze des nachgeordneten Filtermoduls (2a, 2b, 2c) notwendig ist,
- Reinigen des nachgelagerten Filtermoduls (2a, 2b, 2c) und dabei Unterbrechung des Filtrationsbetriebs oder Weiterführen des Filtrationsbetriebs mittels des oder der weiteren Filtermodule (2a, 2b, 2c), und
- zugleich oder nachfolgend Nachordnen eines nächsten Filtermoduls (2a, 2b, 2c) und Betrieb des bisher nachgeordneten Filtermoduls (2a. 2b, 2c) nach der Reinigung als vorgelagertes Filtermodul (2a, 2b, 2c), wobei das Verfahren derart betrieben wird, dass jedes der Filtermodule (2a, 2b, 2c) im Verfahrensverlauf wechselnd und zeitweilig nachgeordnet betrieben wird.

2. Verfahren zur Filtration nach Anspruch 1, **dadurch gekennzeichnet, dass** die Querstrom-Membranfiltrationsanlage (1) wenigstens drei Filtermodule (2a, 2b, 2c) aufweist und während der Reinigung des bislang nachgeordneten Filtermoduls (2a, 2b, 2c) ein weiteres, bislang vorgeordnetes Filtermodul (2a, 2b, 2c) nachgeordnet wird, wobei bei der Reinigung des Filtermoduls (2a, 2b, 2c) der Filtrationsbetrieb kontinuierlich und/oder unterbrechungsfrei fortgeführt wird.

3. Verfahren zur Filtration nach Anspruch 1 oder 2, **dadurch gekennzeichnet, dass** das Filtermodul (2a, 2b, 2c) während des Reinigens nicht zur Filtration betrieben wird und/oder aus dem Filtermodul (2a, 2b, 2c) während des Reinigens kein Unfiltrat entnommen wird und/oder dem Filtermodul (2a, 2b, 2c) während des Reinigens kein Retentat und/oder kein Unfiltrat zugleitet wird.

4. Verfahren zur Filtration nach wenigstens einem der vorhergehenden Ansprüche, **dadurch gekennzeichnet, dass** während des Reinigens des bislang nachgeordneten Filtermoduls (2a, 2b, 2c) bei einer Querstrom-Membranfiltrationsanlage (1) mit nur zwei Filtermodulen (2a, 2b, 2c) der Filtrationsbetrieb unterbrochen oder ausschließlich mit dem verbleibenden Filtermodul (2a, 2b, 2c) weitergeführt wird und der Reinigung nachfolgend das gereinigte Filtermodul (2a, 2b, 2c) als vorgelagertes Filtermodul (2a, 2b, 2c) betrieben wird.

5. Verfahren zur Filtration nach wenigstens einem der vorhergehenden Ansprüche, **dadurch gekennzeichnet, dass** zu jedem Zeitpunkt des Betriebs der Querstrom-Membranfiltrationsanlage (1) lediglich ein einziges Filtermodul (2a, 2b, 2c) nachgeordnet ist und/oder sich in der Reinigung befindet.

6. Verfahren zur Filtration nach wenigstens einem der vorhergehenden Ansprüche, **dadurch gekennzeichnet, dass** die Querstrom-Membranfiltrationsanlage (1) wenigstens vier Filtermodule (2a, 2b, 2c) aufweist und durchgängig zwei vorgelagerte Filtermodule (2a, 2b, 2c) parallel zueinander sowie in Reihe mit einem nachgelagerten Filtermodul (2a, 2b, 2c) betrieben werden und/oder sich genau ein Filtermodul (2a, 2b, 2c) in Reinigung befindet.

7. Verfahren zur Filtration nach wenigstens einem der vorhergehenden Ansprüche, **dadurch gekennzeichnet, dass** während des Filtrationsbetriebs zeitweilig alle Filtermodule (2a, 2b, 2c) als vorgelagerte Filtermodule (2a, 2b, 2c) parallel zueinander betrieben werden und zeitweilig ein Filtermodul (2a, 2b, 2c) nachgeordnet wird und/oder sich in Reinigung befindet.

8. Verfahren zur Filtration nach wenigstens einem der vorhergehenden Ansprüche, **dadurch gekennzeichnet, dass** die Menge des den vorgelagerten Filtermodulen (2a, 2b, 2c) zugeführten Unfiltrats größer als der ideale Filterdurchsatz der vorgelagerten Filtermodule (2a, 2b, 2c) ist, wobei bevorzugt die allen vorgelagerten Filtermodulen (2a, 2b, 2c) überschüssig zugeleitete Retentatmenge im Wesentlichen dem idealen Filterdurchsatz des nachgeordneten Filtermoduls (2a, 2b, 2c) entspricht.

9. Verfahren zur Filtration nach wenigstens einem der vorhergehenden Ansprüche, **dadurch gekennzeichnet, dass** der Zufluss des Unfiltrats und/oder der Abfluss des Retentats für jedes vorgelagerte Filtermodul (2a, 2b, 2c) individuell mittels eines entsprechenden Unfiltratventils (6a, 6b, 6c) und/oder Retentatventils (8a, 8b, 8c) gesteuert wird.

10. Verfahren zur Filtration nach wenigstens einem der vorhergehenden Ansprüche, **dadurch gekennzeichnet, dass** das Nachordnen und/oder die Reinigung der Filtermodule (2a, 2b, 2c) in einer gleichbleibenden Reihenfolge und/oder im kontinuierlichen Wechsel erfolgt.

11. Verfahren zur Filtration nach wenigstens einem der vorhergehenden Ansprüche, **dadurch gekennzeichnet, dass** das Filtermodul (2a, 2b, 2c) mit der längsten Betriebsdauer seit einer Reinigung und/oder das Filtermodul (2a, 2b, 2c) mit der aktuell geringsten Filterleistung und/oder das Filtermodul (2a, 2b, 2c) mit der größten Trubgehalt zum Nachordnen ausgewählt wird.

12. Verfahren zur Filtration nach wenigstens einem der vorhergehenden Ansprüche, **dadurch gekennzeichnet, dass** während des Filtrationsbetriebs ein Anteil des Retentats in den vorgelagerten Unfiltrattank (9) rückgeleitet wird.

13. Verfahren zur Filtration nach wenigstens einem der vorhergehenden Ansprüche, **dadurch gekennzeichnet, dass** ein Rückleiten eines Anteils des Retentats in den Unfiltrattank (9) nur dann erfolgt, wenn alle Filtermodule (2a, 2b, 2c) als vorgelagerte Filtermodule (2a, 2b, 2c) parallel zueinander betrieben werden und/oder wenn eine Reinigung eines Filtermoduls (2a, 2b, 2c) erfolgt.

14. Verfahren zur Filtration nach wenigstens einem der vorhergehenden Ansprüche, **dadurch gekennzeichnet, dass** den Filtermodulen (2a, 2b, 2c) ein mit der Filtratleitung (4) verbundener Filtrattank nachgelagert ist, der bevorzugt wenigstens einen Sensor zum Erfassen des Füllstandes aufweist und die Steuerung der Häufigkeit eine Reinigung eines der Filtermodule (2a, 2b, 2c) unter Berücksichtigung des Füllstandes des Filtrattanks erfolgt.

15. Querstrom-Membranfiltrationsanlage (1) zur Filtration von Flüssigkeiten mit
- wenigstens zwei Filtermodulen (2a, 2b, 2c),
- einer die Filtermodule (2a, 2b, 2c) mit einem Unfiltrattank (9) verbindenden Unfiltratleitung (3),
- einer das Filtrat aus den Filtermodulen (2a, 2b, 2c) zu einem Filtrattank leitenden Filtratleitung (4),
- einer gemeinsamen, wenigstens alle Filtermodule (2a, 2b, 2c) untereinander und bevorzugt auch mit dem Unfiltrattank (9) verbindenden Retentatleitung (5), und
- einer Steuervorrichtung, die zum Steuern eines wechselnd nachgelagerten Betriebs der einzelnen Filtermodule (2a, 2b, 2c) nach einem Verfahren gemäß einem der Ansprüche 1 - 14 eingerichtet ist,
- wobei die Filtermodule (2a, 2b, 2c) derart innerhalb der Querstrom-Membranfiltrationsanlage (1) angeordnet sind, dass alle Filtermodule (2a, 2b, 2c) zueinander parallel betrieben werden können und zugleich jedes Filtermodul (2a, 2b, 2c) zu den übrigen Filtermodulen (2a, 2b, 2c) als nachgelagertes Filtermodul (2a, 2b, 2c) in Reihe schaltbar ist und dabei bevorzugt dem nachgelagerten Filtermodul (2a, 2b, 2c) das Retentat der weiteren Filtermodule (2a, 2b, 2c) und/oder kein Unfiltrat zugeleitet wird.
